# EUROPÄISCHE PATENTANMELDUNG

(11) **EP 1 296 426 A2**
(43) Veröffentlichungstag der Anmeldung: **26.03.2003**
(21) Anmeldenummer: 02020191.9
(22) Anmeldetag: 10.09.2002
(51) Int. Cl.: H02B 1/056

(54) **Elektrische Installationsverteilung**

(30) Priorität: 21.09.2001 DE 10146502
(71) Anmelder: ABB PATENT GmbH, 68526 Ladenburg (DE)
(72) Erfinder: Habedank, Winrich, Dr.-Ing., 69181 Leimen (DE); Heilig, Peter, Dipl.-Ing., 69121 Heidelberg (DE); Kommert, Richard, Dipl.-Ing., 69124 Heidelberg (DE); Popa, Heinz-Erich, Dr.-Ing., 69245 Bammental (DE); Puhr-Westerheide, Jörg, Dr.-Ing., 69231 Rauenberg-Malschenberg (DE); Siedelhofer, Bernd, Dipl.-Ing., 69121 Heidelberg (DE); Stritt, Helmut, Dipl.-Ing., 68782 Brühl (DE); Werner, Karl-Thomas, Dipl.-Ing., 68753 Waghäusel-Wiesenthal (DE)
(74) Vertreter: Miller, Toivo

(57) **Zusammenfassung**

Es wird eine in einem Gehäuse untergebrachte elektrische Installationsverteilung beschrieben, die einen in das Gehäuse eingeführten Zugangsleiter und zu einzelnen Verbrauchern führende Abgangsleiter, elektrische Installationsgeräte, unterschiedlicher Schutzaufgaben, wie mit z. B. Fehlerstromschutz, Kurzschluß oder Überstromschutz und dergleichen, die mit dem Zugangsleiter und den Abgangsleitern über mit diesen verbundenen Verbindungsleiter enthaltende Verbindungssysteme mittels einer Steckverbindung verbindbar sind, und eine Tragplatte zur Halterung der Installationsgeräte aufweist, wobei die Verbindungsleiter unterhalb der Tragplatte angeordnet sind und die Tragplatte Öffnungen aufweist, in die an den Installationsgeräten angeordnete Steckelemente einführbar sind.

Die Installationsverteilung umfaßt
- ein Basismodul mit den Installationsgeräten zuzuordnenden Grundund/oder Grundschutzfunktionen, z. B. Überspannungsschutz oder Strombegrenzung,
- wenigstens ein als Stromkreismodul ausgebildetes Gerät mit bestimmten Zusatzschutzfunktionen, z. B. Kurzschlußschutz, Überstromoder Fehlerstromschutz, die an die Grund- bzw. Grundschutzfunktionen im Basismodul angepaßt sind und mit diesen zusammen wirken, und
- ein Abgangsmodul zum Anschluß von zu den Verbraucher führenden Abgangsleitern.

## Beschreibung

Die Erfindung betrifft eine elektrische Installationsverteilung gemäß dem Oberbegriff des Anspruches 1.

Derartige Installationsverteilungen werden in Gebäuden zur Stromverteilung und Absicherung installiert ; in einem Installationsverteilergehäuse sind Leitungsschutzschalter, Fehlerstromschutzschalter und dgl. untergebracht, mit denen einzelne Verbraucher innerhalb eines Netzes geschützt werden sollen.

Üblicherweise enthalten derartige Gehäuse an ihrem Gehäuseboden Hutprofiltragschienen, auf denen die Schaltgeräte aufgeschnappt werden. Mittels Sammelschienen sind die Schaltgeräte phasenweise miteinander verbunden, wobei bei einphasigen Geräten lediglich eine Sammelschiene und bei mehrphasigen Anordnungen so genannte Sammelschienenblöcke verwendet werden, die ein Sammelschienen - Aufnahmegehäuse mit mehreren Kammern und in die Kammern eingesetzten Flachbandleiter aufweisen, wobei an den Flachbandleitern Anschlußfahnen vorgesehen sind, die in Anschlußklemmen an den Schaltgeräten einsteckbar und darin festklemmbar sind. Wenn mehrere Hutprofiltragschienen übereinander angeordnet sind, dann sind Verbindungsleiteranordnungen vorgesehen, mit denen die einzelnen Sammelschienen verbunden werden.

Aus der DE 196 28 957 A 1 ist eine Installationsverteilung bekannt, die ein Gehäuse aufweist, in dem Flachbandleiter untergebracht sind, an denen Anschlußfahnen angeformt sind, die Kontakttulpen tragen, in die an der Unterseite der Schaltgeräte angeordnete Steckerfahnen einsteckbar sind, wobei am Gehäuse eine Hutprofiltragschiene angebracht ist, auf die die Schaltgeräte aufgeschnappt werden. Beim Aufschnappen gelangen die Steckerfahnen durch im Gehäuse vorgesehene Öffnungen mit den Kontakttulpen in elektrisch leitenden Kontakt. Als Schaltgeräte werden solche verwendet, die eine übliche Schaltgeräteform besitzen ; lediglich auf der Unterseite ist die Stekkerfahne angebracht, anstatt Schraubanschlußklemmen, in die elektrische Leiter durch Öffnungen an den Schmalseiten eingesteckt werden.

Mit dieser Anordnung wird im Vergleich zu hergebrachten Verteilungen schon eine erhebliche Montageerleichterung erreicht, insoweit als wenigstens auf der Zugangsseite des Schaltgerätes das Festklemmen eines elektrischen Leiters oder einer Anschlußfahne mittels eines Werkzeuges nicht mehr erforderlich ist.

In die Verteilung wird eine Zugangsleitung eingeführt, die mit den Sammelschienen verbunden wird ; die den einzelnen Schaltgeräten zugeordneten Abgangsleitungen sind innerhalb des Installationsverteilergehäuses verlegt und aus dem Gehäuse herausgeführt, wobei die Abgangsleitungen an die Zuleitungen zu den Verbrauchern angeschlossen werden. Hier können sich durch Verwechselungen Fehlanschließungen ergeben, beispielsweise so, dass ein mittels eines Fehlerstromschutzschalters abzusichernder Verbraucher irrtümlicherweise an einen Leitungsschutzschalter angeschlossen wird.

Aufgabe der Erfindung ist es, eine Installationsverteilung der eingangs genannten Art zu schaffen, bei der die Montage noch weiter vereinfacht wird und Fehlanschließungen vermieden werden.

Diese Aufgabe wird erfindungsgemäß durch die Merkmale des Anspruches 1 gelöst.

Erfindungsgemäß besitzt die Installationsverteilung ein Basismodul, das Grund - und/oder Grundschutzfunktionen aufweist, wenigstens ein alsStromkreismodul ausgebildetes Gerät mit bestimmten Zusatzschutzfunktionen, die an die Grund - und/oder Grundschutzfunktionen im Basismodul angepaßt sind und mit diesen zusammenwirken,und ein Abgangsmodul zum Anschluß von zu den Verbrauchern führenden Anschlußleitern.

Damit werden die einzelnen Funktionen getrennt in Grundfunktionen und/oder Grundschutzfunktionen, die in jeder Installationsverteilung vorhanden sein müssen, und in solche Funktionen, die damit zusammenwirken und in den Stromkreismodulen enthalten sind. Beispielsweise ist in einem Stromkreismodul eine Leitungsschutzschalter - Funktion untergebracht; die im Basismodul vorhandene Kurzschlußschutzfunktion entspricht einer Kontaktöffnung, wie sie in einem selektiven Hauptschalter vorhanden ist.

Die Grundschutzfunktion kann z. B. einen Kurzschlussschutz, der beispielsweise durch eine dynamische Kontaktöffnungsanordnung oder einen Widerstand mit positivem Temperaturkoeffizienten gebildet sein kann, die beide im Basismodul untergebracht sind, einen Fehlerstromschutz mit Brandschutz und einen Überspannungsschutz umfassen. Dabei kann ein Fehlerstrom eingestellt werden, der etwa 300 mA beträgt.

Die in den Stromkreismodulen befindlichen Funktionen können eine Kurzschluß-, Fehlerstrom- und Überspannungschutzfunktion aufweisen, wobei die Kurzschlußfunktion z. B. der eines Leitungsschutzschalters entspricht, und wobei die Kurzschlußschutzfunktion im Basismodul wie ein selektiver Hauptleitungsschutzschalter wirkt.

In einem der Stromkreismodule kann auch ein Zeitgeber oder ähnliches vorhanden sein.

Der Installationsverteilung ist eine Bedieneinheit zugeordnet, mit der die Funktionen des Basismoduls und der Stromkreismodule einstellbar sind. Dabei können die Grundschutzfunktionen nur von einem Installateur eingestellt werden ; gewisse Funktionen in den Stromkreismodulen, wie z. B. im Zeitgeber, können dann vom Benutzer verändert werden.

Die einzelnen Verbindungsleiter zwischen dem Basismodul und den Stromkreismodulen sind in besonders vorteilhafter Weise als vorgefertigte Stromschienen ausgebildet, die im Installationsgehäuse ortsfest eingebaut sind.

Gemäß einer weiteren vorteilhaften Ausgestaltung der Erfindung können auf der Vorderseite jedes als Stromkreismodul ausgebildeten Gerätes Anzeige - und Bedienfelder vorgesehen sein, z. B. für eine Schaltstellungsanzeige oder für Ein- und Ausschaltbetätigungen. Dabei kann jedes Stromkreismodul auch mit Grundfunktionen ausgestattet sein ; mit der Bedieneinheit kann das Stromkreismodul parametriert werden.

Gemäß einer weiteren vorteilhaften Ausgestaltung und Verbesserung der Erfindung sind die Verbindungsleiter zwischen Basismodul und den Stromkreismodulen als vorgefertigte Sammelschienen ausgebildet. Dabei können die Sammelschienen bzw. Verbindungsleiter, an die die Stromkreismodule angeschlossen werden, in wenigstens einem Sammelschienengehäuse untergebracht sein, an dem die Zugangsöffnungen für alle Funktionen zu den Sammelschienen vorgesehen sind. Die Verbindung zu den Sammelschienen erfolgt über Steckerstifte.

Erfindungsgemäß bildet das Basismodul mit der Bedieneinheit und einer ersten Anzahl von Stromkreismodulen eine Grundeinheit, die durch eine Zusatzeinheit erweitert werden kann, die nur Stromkreismodule aufnehmen kann. Die Stromkreismodule dieser Zusatzeinheit können von der Bedieneinheit oder mittels der Bedieneinheit der Grundeinheit angesteuert und parametriert werden. Damit kann die Installationsverteilung nach Bedarf erweitert werden.

Die einzelnen Stromkreismodule sind auf das Sammelschienengehäuse aufsteckbar und aufrastbar, wobei für Stromkreismodule mit gleichen Funktionen eine gleiche Anordnung der Steckelemente vorgesehen ist, sodass mit gleichem Schutz abzusichernde Verbraucher nur mit daran angepaßten Stromkreismodulen abgesichert werden.

Gemäß einer weiteren Ausgestaltung der Erfindung können die Kontaktöffnungen und Steckelemente für je ein Stromkreismodul gleich oder unterschiedlich für je einen Öffnungsbereich so einander zugeordnet sein, dass an jedem Öffnungsbereich nur jeweils ein Stromkreismodul eines bestimmten Typs anbringbar ist.

Die Steckelemente sind vorzugsweise als bezogen auf ihre Längsachse in radialer Richtung federnde Stifte ausgebildet, die in Aufnahmeöffnungen in den Sammelschienen einsteckbar und elektrisch und mechanisch fest damit verbunden sind.

Eine bevorzugte Ausgestaltung der Erfindung kann dahin gehen, daß wenigstens dem Basismodul und/oder der Bedieneinheit Ankoppelungselemente zur Ankoppelung an ein Bussystem (EIB) zugeordnet sein können. Damit kann die Installationsverteilung in einem Bussystem eines Gebäudes gemäß z. B. den EIB- Vorschriften und Vorgaben, eingereiht werden.

Weitere vorteilhafte Ausgestaltungen der Erfindung, insbesondere Ausgestaltungen der einzelnen Sammelschienen, sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigen:
Fig. 1 eine schematische Darstellung der Installationsverteilung gemäß der Erfindung, in Aufsicht,
Fig. 2 eine schematische Darstellung zweier Module,
Fig. 3 eine schematische Darstellung einer Sammelschienenanordnung,
Fig. 4 eine Aufsicht auf ein Modul von unten, in schematischer Darstellung,
Fig. 5 eine perspektivische, schematische Darstellung eines Moduls,
Fig. 6 eine Darstellung der einzelnen Phasensammelschienen,
Fig. 7 eine Schnittansicht durch ein Sammelschienengehäuse,
Fig. 8 eine Schnittansicht durch ein Sammelschienengehäuse mit unterschiedlicher Kontaktierung,
Fig. 9 und Fig. 10 unterschiedliche Ansichten eines Kontaktstiftes,
Fig. 11 eine schematische Darstellung eines Teilbereiches einer Sammelschienenanordnung,
Fig. 12 eine Ausgestaltung eines Installationsgerätes, von unten,
Fig. 13 eine Seitenansicht des Gerätes gemäß Fig. 12,
Fig. 14 eine Schmalseitenansicht des Gerätes gemäß den Figuren 12 und 13 und
Fig. 15 eine Geräteverriegelung, mit der ein Gerät auf einem Sammelschienengehäuse fixiert werden kann.

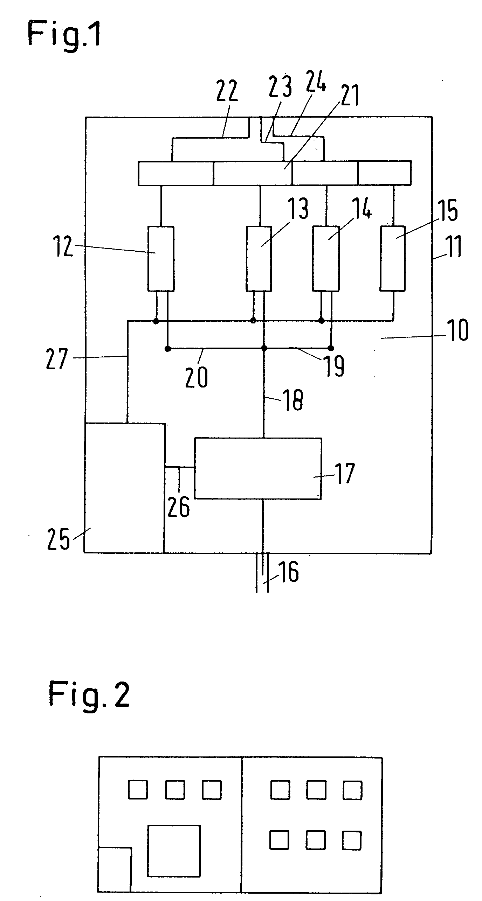

Es sei Bezug genommen auf die Fig. 1.

In eine Installationsverteilung 10, die ein Gehäuse 11 umfasst, führt eine Eingangsleitung 16, die mit dem vom Energieversorgungsunternehmen herkommenden Netz verbunden ist. Diese Eingangsleitung oder bzw. Eingangskabel führt zu einem Grundmodul 17, dessen Funktionen weiter unten dargestellt wird. Von diesem Basismodul führt eine Verteilleitung 18 zu Sammelschienen 19 und 20, die mit Stromkreismodulen 12,13,14, hier kurz auch Modulen genannt, verbunden sind, in denen bestimmte Sicherungsfunktionen untergebracht sind. Die Ausgangsseite der Module 12 bis 14 ist auf eine Verteilleiste 21 gelegt, an der Anschlußleiter 22,23,24 angeschlossen sind, die zu Verbrauchern führen.
Zusätzlich ist ein Modul 15 vorgesehen, welches beispielsweise als Zeitgeber dient bzw. eine Zeitfunktion enthält.

In der Installationsverteilung 10 befindet sich eine Bedien - und/oder Steuerungseinheit 25, von dem aus das Basismodul 17 und die einzelnen Module 12 bis 15 parametrierbar sind. Die von der Bedieneinheit 25 ausgehenden Signale werden über Steuerleitungen 26 der Basiseinheit 17 bzw. über Steuerleitungen 27 den einzelnen Modulen 12 bis 15 zugeführt.

Das Basismodul 17 soll dabei folgende Aufgaben erfüllen:

Alle Installationsschaltgeräte, die durch die Module gebildet sind, besitzen bestimmte Schutzfunktionen, die auf einen speziellen Verbraucher zugeschnitten sind. Allen diesen Schutzfunktionen der Module sind Grundschutzfunktionen, die für alle Module gleich sind, zugeordnet, z. B. die Grundschutzfunktion Fehlerstromschutz und/oder Brandschutz, die Grundschutzfunktion Überspannungenschutz und die Grundschutzfunktion Kurzschlussschutz. Diese Grundschutzfunktionen sind im Basismodul realisiert.

Die Grundschutzfunktionen " Fehlerstrom - und/oder Brandschutz " wird durch eine übliche Fehlerstrom - Detektionseinrichtung erzeugt, bei der der Fehlerstromschutz und/oder der Brandschutz beispielsweise auf 300 mA eingestellt ist. Fehlerströme, die kleiner als 300 mA sind, werden dann von den einzelnen Modulen abgesichert.

Eine weitere Grundschutzfunktion ist ein Überstromschutz. Dieser Überstromschutz wird bei einem normalen, handelsüblichen Leitungsschutzschalter durch ein Thermobimetall erzeugt, die entsprechende Grundschutzfunktion kann ebenfalls durch ein Thermobimetall oder eine Formgedächtnis - Legierung im Basismodul erzeugt werden. Die Grundschutzfunktion " Kurzschlussschutz " kann durch einen Hauptleitungsschutzschalter, einen nennstromabhängigen Widerstand mit positivem Temperaturkoeffizienten oder einen dynamischen Öffner erzielt werden; die Kurzschlußschutzfunktion wird dann zusammen mit den einzelnen Modulen erreicht.

Damit die einzelnen Grundschutzfunktionen eingestellt und damit darüber hinaus auch die Module in bestimmter Weise mit bestimmten Parametern versehen werden können, ist die Bedieneinheit 25 vorgesehen, die eine Bedien - und Anzeigeoberfläche besitzt und die bei der Errichtung der Installation vom Installateur betätigt wird, damit die einzelnen Module und das Basismodul gemäß dem Bedarf eingestellt werden können.

Zusätzlich zu den hier angegebenen Modulen 12 bis 15 können auch weitere Module mit weiteren Steuer -, Schalt - und Schutzfunktionen vorgesehen sein.

Die Fig. 2 zeigt beispielhaft eine Aufsicht auf zwei Module mit unterschiedlichen Funktionen.

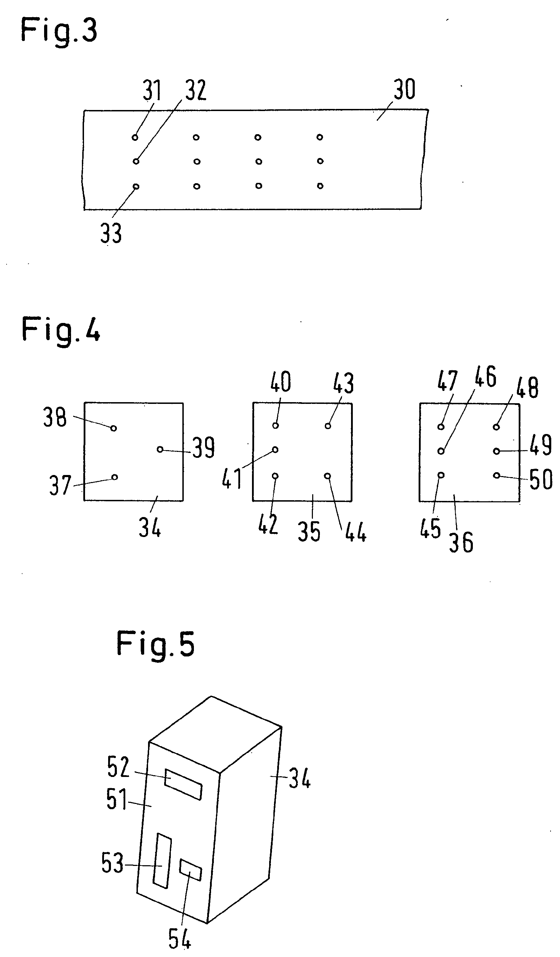

Die einzelnen Module 12 bis 15 werden auf ein Sammelschienengehäuse aufgesetzt und daran verrastet, das in der Fig. 3 mit 30 bezeichnet ist. Dieses Sammelschienengehäuse, welches weiter unten näher beschrieben werden soll, besitzt Zugangsöffnungen 31,32 und 33 usw., über die in Fig. 4 dargestellte Module 34,35 und 36 eingefügt werden können ; die Fig. 4 zeigt eine Aufsicht von unten auf ein Modul 34, bei dem insgesamt drei Steckerstifte 37,38 und 39 auf der Unterseite herausragen. Bei dem Modul 35 ragen fünf Steckerstift den 41 bis 44 heraus und bei dem Modul 36 sind sechs Stekkerstifte 45,46,47,48,49 und 50 vorgesehen.

Die Fig. 5 zeigt eine schematische Darstellung eines Moduls, beispielsweise des Moduls 34, auf dessen Vorderseite 51 Anzeigenfenster 52 sowie Bedienelemente 53 und 54 vorgesehen sind.

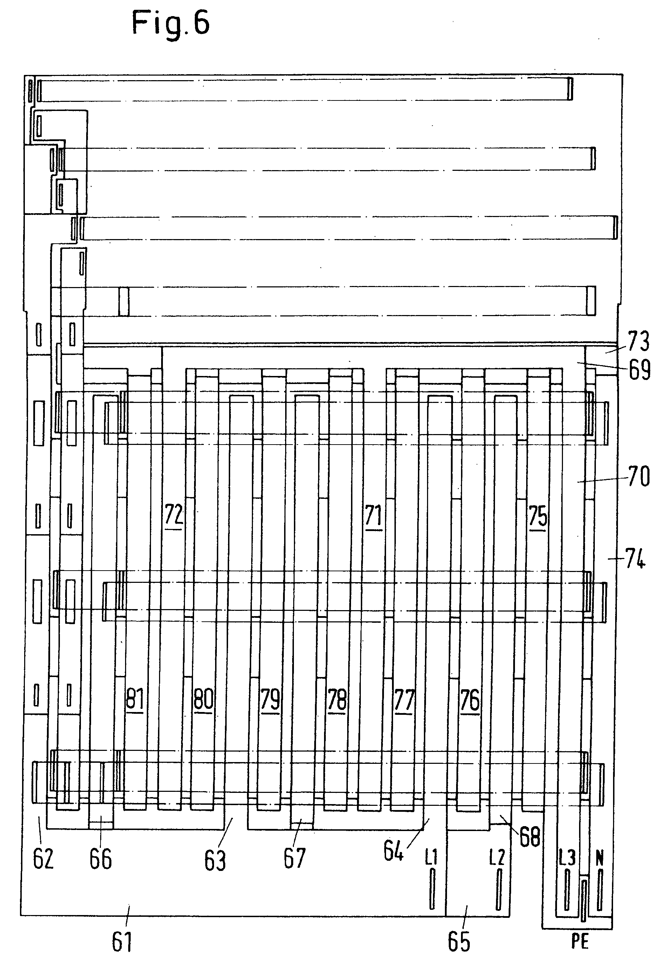

Die Erfindung ist anhand eines Ausführungsbeispiels näher erläutert und beschrieben worden. Es sind selbstverständlich viele Abwandlungen möglich, die sich alle im Grundprinzip der Erfindung befinden ; es ist selbstverständlich, dass die einzelnen Module konstruktiv anders ausgestaltet sein können ; wie die Sammelschienen einander zugeordnet sind oder die Module an den Sammelschienen bzw. am Sammelschienengehäuse fixiert werden, ist von geringerer Bedeutung ; von Bedeutung für die Erfindung sind die Zuordnung der Grundeinheit zu den Modulen mit den entsprechenden Grundschutzfunktionen, die Bedieneinheit, mit der die Grundeinheit und die Module parametrierbar sind, und darüber hinaus die Zuordnung der Ausgangsklemmen zueinander dergestalt, dass von den Verbrauchern her kommende Netzleiter mit entsprechend codierten Kontakt - Elementen Verbindung finden können.
Wie eine Anordnung von Sammelschienen aussehen könnte, zeigen die Fig. 6 bis 15.

Es sei nun Bezug genommen auf die Fig. 6.

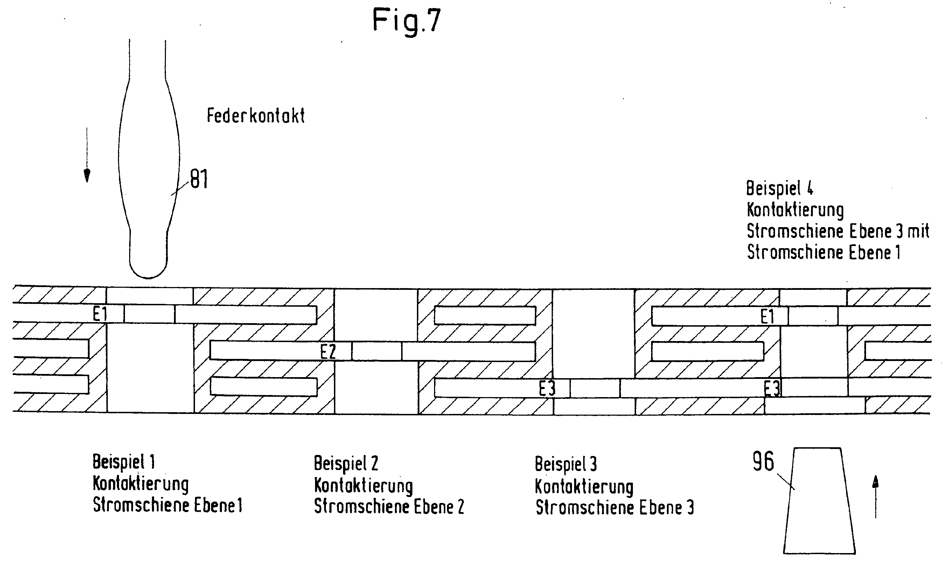

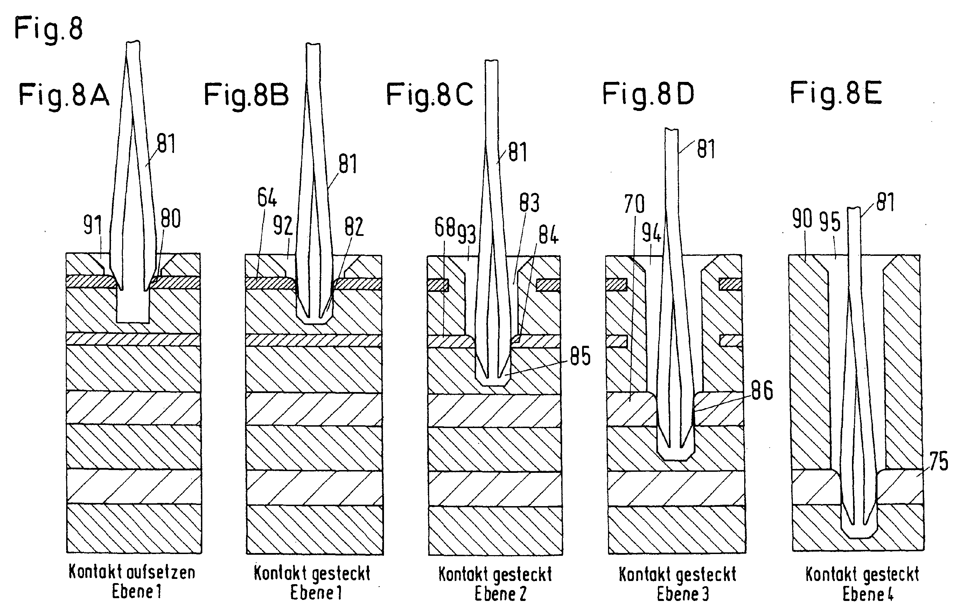

Fig. 6 zeigt eine Aufsicht auf eine Sammelschienenanordnung, die in ein Sammelschienengehäuse eingesetzt werden kann, wie es in den Fig. 7 und 8 dargestellt ist.

Die Sammelschiene L 1 besitzt ein senkrecht zur Anreihrichtung der Module verlaufendes Verbindungsstück 61, an dem senkrecht dazu Zungen 62, 63 und 64 angeformt sind. Die Länge des Verbindungsstückes 61 entspricht dem Abstand der Module voneinander und die Länge der Zungen 62 bis 64 entspricht der Länge der angereihten Module in Anreihrichtung gesehen.

In ähnlicher Weise ist die Sammelschiene L2 aufgebaut. Sie besitzt einen Verbindungssteg 65, an dem eine der Anzahl der Phasen entsprechende Anzahl von Zungen 66, 67, und 68 angeformt ist. Die Zungen 66 und 62, 67 und 63, 68 und 64 verlaufen parallel zueinander und springen von ihren Verbindungsstegen in die gleiche Richtung vor.

Diesen beiden Phasenleitern ist ein dritter Phasenleiter L3 zugeordnet, der ein Verbindungsteil 69 besitzt, an dem Zungen 70, 71 und 72 angeformt sind. Das Verbindungsteil 69 befindet sich in der Nähe der Enden der Zungen 62, 66; 63, 67; 64, 68; und die Zungen 70, 71 und 72 springen in entgegengesetzte Richtung zu den Verbindungsstücken 61 und 65 vor.

Zugeordnet zu den drei Phasenleitern ist ein Neutralleiter N, der einen ähnlichen Aufbau besitzt, mit einem Verbindungsstück 73 unterhalb des Verbindungsstück des 69 und mit in die gleiche Richtung wie die Zungen 70,71 und 72 vorspringenden Zungen 74,75,76,77,78,79,80,81. Weiterhin ist als PE - Leiter eine Platte vorgesehen, die unterhalb der einzelnen Phasenschienen und des Neutralleiters liegt.

Die Fig. 8 zeigt einen Querschnitt durch die in Isolierstoffmaterial eingebetteten Sammelschienen. Man erkennt, dass die einzelnen Sammelschienen in unterschiedlichen Ebenen angeordnet sind. Beispielsweise die Sammelschiene L1 befindet sich mit ihrer Zunge 64 in der ersten Ebene, d. h. in der obersten Ebene. Man erkennt, dass diese Sammelschiene bzw. Zunge 64 Öffnungen 80 aufweist, durch die weiter unten näher dargestellte Kontaktfedern 81 hindurch greifen. In der Zeichnung ganz links Fig. 8 a schnäbelt die Kontaktfeder 81 die Öffnung 80 gerade an ; die der Fig. 8b greift die Kontaktfeder 81 in ein unterhalb der Zunge 64 befindliches Sackloch 82 ein.

In der Ebene unterhalb der Zunge 64 befindet sich die Zunge 68 ; durch eine Durchgangsöffnung 83 hindurch kommt ein Kontaktfederelement 81 mit der Zunge 68 in Berührung, wobei die Zunge 68 durch eine Öffnung 84 in der Zunge 68 die in ein darunter befindliches Sackloch 85 eingreift. Eine Kontaktierung der Zunge 64 wird dadurch vermieden, daß die Durchgangsöffnung 83 ausreichend groß bemessen wird.

In der weiter darunter liegenden Ebene könnte beispielsweise eine Zunge 70 vorgesehen sein, durch deren Öffnung 86 hindurch die Kontaktfeder 81 hindurch gesteckt wird ; bei der Fig. 8b ist die Kontaktfeder 81 mit einer Sammelschiene in der 4. Ebene, d. h. mit der Zunge beispielsweise des Neutralleiters 75 kontaktiert .

Die Fig. 8 zeigt, dass die einzelnen Sammelschienen in den Isolierstoffkörper 90 eingebettet sind, der Zugang zu Öffnungen 90,92,93/84,94 und 95 zu den einzelnen Zungen aufweist.

Die Zeichnung Fig. 7 zeigt die Anordnung gemäß Fig. 8 in schematischer Darstellung, wobei keine vier Ebenen, sondern lediglich drei Ebenen von Sammelschienen übereinander liegend dargestellt sind.

Die Kontaktfeder der Fig. 7 besitzt die gleiche Bezugsziffer 81, obwohl der Aufbau geringfügig anders ist, um die Ähnlichkeit bezüglich der Funktion darzustellen.

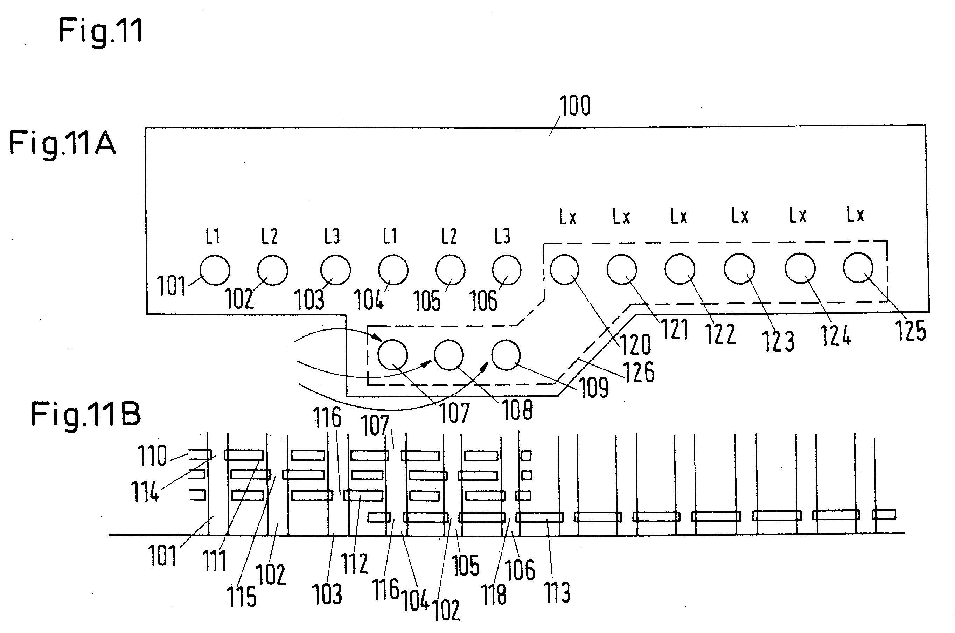

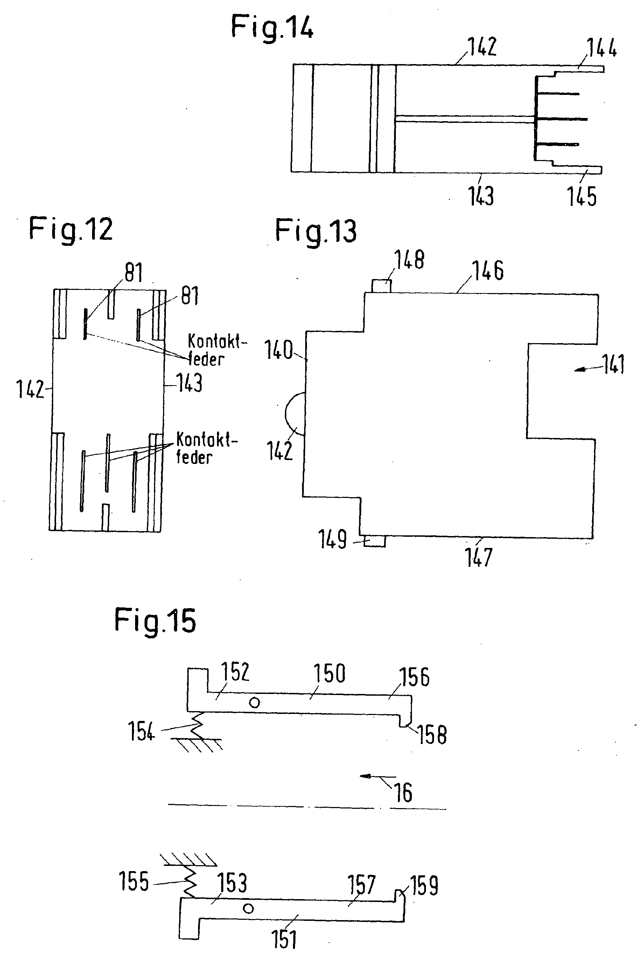

Die Fig. 7 zeigt weiterhin ein Kontaktelement 96, welches in der Ebene 1 und in der Ebene 3 befindliche Sammelschienen miteinander verbindet. Der Grund, warum dieses erforderlich ist, ist aus der Fig. 11 ersichtlich. Das die Sammelschienen aufnehmende Isolierstoffgehäuse 100, welches dem Isolierstoffgehäuse 90 der Fig. 13 entspricht, besitzt Öffnungen 101, 102, 103, 104, 105 und 106 sowie Öffnungen 107, 108 und 109.

Die Fig. 11 zeigt einen der Fig. 8 entsprechenden Schnitt durch ein Sammelschienengehäuse; hierbei sind insgesamt vier Sammelschienenebenen 110, 111, 112 und 113 vorgesehen. Die im Bereich der Öffnung 101 befindliche Sammelschiene 110 besitzt einen Durchbruch 114, der kleiner ist als der Durchmesser des Loches 101. In dem Durchbruch 102 besitzt die Sammelschiene 111 einen Durchbruch 115, der gleich groß ist als der Durchbruch 114, somit kleiner als das Loch 102 ist. Im Bereich des Loches 103 besitzt die Sammelschiene 112 einen Durchbruch 116, dessen Innendurchmesser dem Innendurchmesser 114 und 115 entspricht. Wenn nun ein Modul mit Kontaktfedern, beispielsweise Kontaktfingern gemäß Fig. 8, in die Öffnungen 101, 102, 103 eingefügt werden, dann kontaktieren diese Kontaktfedern einerseits die Sammelschiene 110, darüber hinaus die Sammelschiene 111 und die Sammelschiene 112.

Unterhalb dieser drei Sammelschienen 110, 111 und 112 befindet sich die Sammelschiene 114 ; man erkennt, dass diese Sammelschiene 113 Öffnungen 116,1 117 und 118 besitzt; diese Öffnungen 116 bis 118 besitzen den gleichen Durchmesser wie die Öffnung 114, 115 und 116 und liegen übereinander, sodass die Phase der Sammelschiene 110 mittels eines Kontaktstückes, beispielsweise des Kontaktstückes 96, auf die Sammelschiene 113 gelegt werden kann. Zu diesem Zweck wird in die Öffnung 107 das Kontaktstück eingefügt, welches die Sammelschienen 110 und 113 miteinander verbindet.

In gleicher Weise könnte die Sammelschiene 111 mit der Sammelschiene 113 bzw. die Sammelschiene 112 mit der Sammelschiene 113 kontaktiert werden.

In der Fig. 11 a sind rechts von Löchern 101 bis 106 in einer Linie damit liegend weitere Löcher 120, 121, 122 123, 124 und 125 vorgesehen ; über die Sammelschiene 113 können dann in die Löcher 120 bis 125 eingesteckte Installationsgeräte je nach Bedarf auf die Phase gelegt werden, die in der Sammelschiene 110, in der Sammelschiene 111 oder in der Sammelschiene 112 gegeben ist. Die Fig. 11 zeigt eine entsprechende Verbindungsleitung 126 in strichlierter Darstellung.

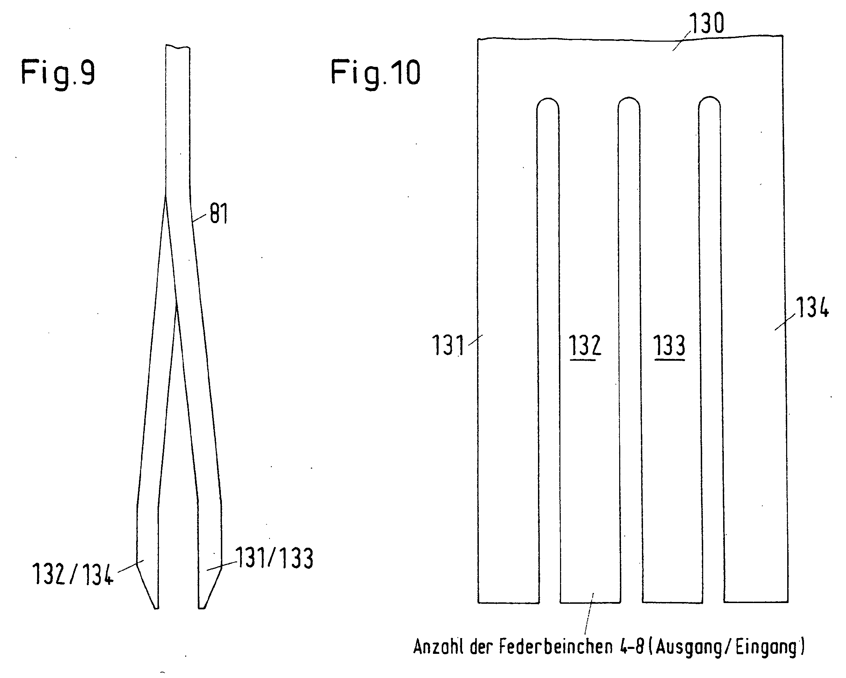

Die Fig. 9 und 10 zeigen eine Kontaktfeder 81. An einem gemeinsamen Kontaktträger 130 sind zinken - förmig Zungen 131,1 132,1 133 und 134 angeformt, die gegeneinander verbogen sind, wie aus der Fig. 14 ersichtlich. Dort sind nach rechts (siehe Fig. 9) ausgebogen die Zungen 131 und 133 und nach links ausgebogen die Zungen 132 und 134.

Die Figuren 12 bis 15 zeigen eine Ausgestaltung eines Installationsgerätes. Das Gerät ist etwa T - oder sockelförmig mit einer Frontseite 140 und einer Befestigungsseite 141 ausgebildet. An der Frontseite befindet sich eine Fläche mit Bedienelementen 142. Auf der Befestigungsseite ragen Kontaktfedern 81 in einer entsprechenden Zuordnung zueinander. An den Breitseiten 142 und 143 schließen Stege 144 und 145 an, die in der Ebene der Breitseiten liegen und zur Führung des Gerätes im Gehäuse der Sammelschienen dienen.

An den Schmalseiten 146 und 147 sind vorspringende Nasen 148,1 149 angeformt, über die das Gerät mittels der Geräteverriegelung gemäß Fig. 10 fixiert werden kann. Die Anordnung gemäß Fig. 15 besitzt zwei drehbar gelagerte Doppelarmhebel 150 und 151, wobei an den Hebelarmen 152 und 153, die der Befestigungsseite zugewandt sind, Federn 154 und 155 angreifen, die die Arme 152, 153 auseinander - und die anderen Arme 156 und 157 gegeneinander drücken. Die freien Enden der Arme 156 und 157 besitzen aufeinanderzuweisende Nasen 158 und 159 ; bei der Montage greifen die Nasen 158 und 159 hinter die Leisten 148 und 149, wobei das Modul mit der Bodenseite 141 in Pfeilrichtung 160 zwischen die beiden Doppelarmhebel 51 und 151 eingefügt wird.

## Patentansprüche

1. In einem Gehäuse untergebrachte elektrische Installationsverteilung, mit einem in das Gehäuse eingeführtem Zugangsleiter und zu einzelnen Verbrauchern führenden Abgangsleitern, mit elektrischen Installationsgeräten, unterschiedlicher Schutzaufgaben, wie mit z. B. Fehlerstromschutz, Kurzschluß oder Überstromschutz und dergleichen, die mit dem Zugangsleiter und den Abgangsleitern über mit diesen verbundenen Verbindungsleiter enthaltende Verbindungssysteme mittels einer Steckverbindung verbindbar sind, und mit einer Tragplatte zur Halterung der Installationsgeräte, wobei die Verbindungsleiter unterhalb der Tragplatte angeordnet sind und die Tragplatte Öffnungen aufweist, in die an den Installationsgeräten angeordnete Steckelemente einführbar sind, **gekennzeichnet durch**
- ein Basismodul mit den Installationsgeräten zuzuordnenden Grundund/oder Grundschutzfunktionen, z. B. Überspannungsschutz oder Strombegrenzung,
- wenigstens ein als Stromkreismodul ausgebildetes Gerät mit bestimmten Zusatzschutzfunktionen, z. B. Kurzschlußschutz, Überstrom- oder Fehlerstromschutz, die an die Grund- bzw. Grundschutzfunktionen im Basismodul angepaßt sind und mit diesen zusammen wirken, und
- **durch** ein Abgangsmodul zum Anschluß von zu den Verbraucher führenden Abgangsleitern.

2. Installationsverteilung nach Anspruch 1, **dadurch gekennzeichnet, daß** die Grundschutzfunktion wenigstens einen Kurzschlußschutz umfaßt.

3. Installationsverteilung nach Anspruch 1 oder 2, **dadurch gekennzeichnet, daß** die Grundschutzfunktion wenigstens einen Fehlerstromschutz und/oder Brandschutz umfaßt.

4. Installationsverteilung nach Anspruch 3, **dadurch gekennzeichnet, daß** der Fehlerstromschutz und/oder der Brandschutz auf 300 mA eingestellt ist.

5. Installationsverteilung nach einem der vorigen Ansprüche, **dadurch gekennzeichnet, daß** die Grundschutzfunktion einen Überspannungsschutz umfaßt.

6. Installationsverteilung nach einem der vorigen Ansprüche, **dadurch gekennzeichnet, daß** die Grundschutzfunktion "Kurzschlußschutz" mit einem Hauptleitungsschutzschalter, einem stromabhängigen Widerstand mit positivem Temperaturkoofizienten oder einem dynamischen Öffner erzielbar ist, der die Kurzschlußfunktion zusammen mit den Stromkreismodulen erreicht.

7. Installationsverteilung nach einem der vorigen Ansprüche, **dadurch gekennzeichnet, daß** die Grundfunktion z. B. eine Zeitgeberfunktion umfaßt.

8. Installationsverteilung nach einem der vorigen Ansprüche, **dadurch gekennzeichnet, daß** Mittel vorgesehen sind, die zur Ankopplung wenigstens des Basismoduls, vorzugsweise der Bedieneinheit und/oder aller anderen Komponenten der Installationsverteilung an ein Bussystem (EIB) geeignet sind.

9. Installationsverteilung nach einem der vorigen Ansprüche, **dadurch gekennzeichnet, daß** dem Basismodul eine Bedieneinheit als Eingabe- und Ausgabeeinheit zugeordnet ist, mit der eine Einstellung (Parametrierung) der Grundschutzfunktionen des Basismoduls und der die Stromkreismodule bildenden Geräte vornehmbar ist.

10. Installationsverteilung nach einem der vorigen Ansprüche, daß die Zeitgeber in den Stromkreismodulen und dergleichen mittels der Bedieneinheit einstellbar ist.

11. Installationsverteilung nach einem der vorigen Ansprüche, **dadurch gekennzeichnet, daß** auf der Vorderseite jedes als Stromkreismodul ausgebildeten Gerätes Anzeige- und Bedienfelder vorgesehen sind, z. B. für eine Schaltstellungsanzeige oder für Ein- und Ausschaltung usw.

12. Installationsverteilung nach einem der vorigen Ansprüche, **dadurch gekennzeichnet, daß** jedes Stromkreismodul mit bestimmten Grundfunktionen ausgestattet und mittels der Bedieneinheit parametrierbar ist.

13. Installationsverteilung nach einem der vorigen Ansprüche, **dadurch gekennzeichnet, daß** wenigstens zwei Basismodule und wenigstens zwei dazugehörige Hilfsschaltermodule vorgesehen sind, die allpolig, d. h. ein- oder mehrpolig, schalten, steuern und dergleichen.

14. Installationsverteilung nach einem der vorigen Ansprüche, daß die Verbindungsleiter zwischen Basismodul und den Stromkreismodulen als vorgefertigte Stromsammelschienen ausgebildet sind.

15. Installationsverteilung nach einem der vorigen Ansprüche, **dadurch gekennzeichnet, daß** die Sammel- bzw. Verbindungsleiter, mit denen die Geräte in Kontakt bringbar sind, in wenigstens einem Sammelschienengehäuse untergebracht sind, die Zugangsöffnungen für alle Funktionen zu den Sammelschienen aufweisen.

16. Installationsverteilung nach einem der vorigen Ansprüche, **dadurch gekennzeichnet, daß** die einzelnen Geräte auf das Sammelschienengehäuse aufsteckbar und aufrastbar sind, wobei für Geräte mit gleichen Funktionen eine gleiche Anordnung der Steckelemente vorgesehen sind, so daß mit gleichem Schutz abzusichernde Verbraucher nur mit daran angepaßten Geräten abgesichert sind.

17. Installationsverteilung nach Anspruch 15, **dadurch gekennzeichnet, daß** die Fixierung der als Module ausgebildeten Geräte mittels der Steckelemente erfolgt.

18. Installationsverteilung nach einem der vorigen Ansprüche, **dadurch gekennzeichnet, daß** das Basismodul mit der Bedieneinheit und einer ersten Anzahl von Stromkreismodulen eine Grundeinheit bildet, die mittels wenigstens einer nur Stromkreismodule enthaltenden Zusatzeinheit erweiterbar ist, und dass die Stromkreismodule der Zusatzeinheit mittels der Bedieneinheit der Grundeinheit ansteuerbar und parametrierbar sind.

19. Installationsverteilung nach einem der vorigen Ansprüche, **dadurch gekennzeichnet, daß** die Öffnungen und Steckelemente für je ein Installationsgerät gleich oder unterschiedlich für je einen Öffnungsbereich so einander zugeordnet sind, daß an jedem Öffnungsbereich nur jeweils ein Stromkreismodul eines bestimmten Types anbringbar ist.

20. Installationsgerät nach einem der vorigen Ansprüche, **dadurch gekennzeichnet, daß** die Steckelemente als in bezogen auf ihre Längsachse radialer Richtung federnde Stifte ausgebildet sind, die in Aufnahmeöffnungen in den Sammelschienen einsteckbar und elektrisch und mechanisch fest damit verbunden sind.
